# EUROPÄISCHE PATENTSCHRIFT

(11) **EP 1 695 805 B1**
(45) Veröffentlichungstag und Bekanntmachung des Hinweises auf die Patenterteilung: **10.10.2007**
(21) Anmeldenummer: 06000662.4
(22) Anmeldetag: 13.01.2006
(51) Int. Cl.: B29C 33/52, C03C 11/00, B29C 70/48, B29C 33/54

(54) **Wasserdispergierbarer Stützkern zur Herstellung von faserverstärkten Strukturhohlbauteilen und Verfahren zur Herstellung von faserverstärkten Strukturhohlbauteilen**
Water dispersible core for producing fibre reinforced hollow objects and method for producing fibre reinforced hollow objects
Noyau de moule dispersible dans l'eau pour produire des objets creux renforcés par des fibres et procédé pour produire des objets creux renforcés par des fibres

(30) Priorität: 26.02.2005 DE 102005008884
(43) Veröffentlichungstag der Anmeldung: 30.08.2006
(73) Patentinhaber: Bayerische Motorenwerke Aktiengesellschaft, 80809 München (DE)
(72) Erfinder: Niesner, Bruno, 84051 Essenbach (DE); Kerscher, Stefan, 85452 Moosinning (DE)
(74) Vertreter: Bücken, Helmut

(56) Entgegenhaltungen:
- EP-A- 0 466 419
- WO-A-98/13183
- DE-A1- 19 534 836
- US-A- 5 492 660
- PATENT ABSTRACTS OF JAPAN Bd. 2002, Nr. 02, 2. April 2002 (2002-04-02) & JP 2001 293742 A (DAISEE KOGYO KK), 23. Oktober 2001 (2001-10-23)

## Beschreibung

Die Erfindung bezieht sich auf einen wasserdispergierbaren Stützkern nach dem Oberbegriff des Anspruchs 1 und ein Verfahren zur Herstellung eines Strukturhohlbauteils aus faserverstärktem Kunststoff mit dem Stützkern.

Zur Herstellung faserverstärkter Kunststoffhohlbauteile wird u.a. das sogenannte Resin Transfer Molding (RTM) - Verfahren und das Vakuum-Injektionsverfahren verwendet.

Dazu wird wenigstens eine Lage der z.B. uni- oder bidirektional gerichteten Verstärkungsfasern zwischen dem Ober- und dem Unterwerkzeug einer beheizten Presse gelegt und die Faserlage mit einem wärmehärtbaren Kunststoff, beispielsweise einem Epoxidharz mit Härter getränkt, der unter Druck in den Hohlraum mit der Faserlage zwischen Ober- und Unterwerkzeug injiziert wird. Ähnlich wird beim Vakuum-Injektionsverfahren vorgegangen, bei dem anstelle von Druck ein Vakuum angelegt wird, um den wärmehärtbaren Kunststoff in die Faserlage zu saugen.

Für Automobile werden zahlreiche Strukturhohlbauteile verwendet, beispielsweise die Stützsäulen, Schweller, Stoßfänger und dergleichen. Diese Hohlbauteile werden dabei meist geklebt. Die Klebestelle kann jedoch zu einem Versagen führen. Zudem lässt die Maßhaltigkeit geklebter Hohlbauteile zu wünschen übrig.

Für die Herstellung von Hohlbauteilen im RTM-Verfahren werden üblicherweise heute Schmelzkerne aus Wachs eingesetzt. Die dafür eingesetzten Prozesse sind wegen der Größe der Kerne sehr aufwändig. Weiterhin bedingt der große Wärmeausdehnungskoeffizient des Wachses eine aufwändige Abstimmung der notwenigen Fertigungsmittel. Nach der eigentlichen Bauteilherstellung werden die Materialien wieder ausgeschmolzen. Dabei verbleibt auf der Werkzeuginnenwand ein Restmaterial, was zum einen das Bauteilgewicht erhöht sowie kritisch hinsichtlich Emissionen und Lackverträglichkeit bewertet wird.

Auch sind Stützkerne aus niedrigschmelzenden Wismutlegierungen verwendet worden. Wegen des hohen Energieaufwandes zum Schmelzen der Kerne, dem hohen Gewicht und der daraus resultierenden schwierigen Handhabbarkeit, aber auch wegen der Gesundheitsgefährdung durch Wismutdämpfe, sind diese Kerne in der Praxis jedoch nicht einsetzbar.

Ferner werden Stützkerne aus hochdichtem Schaumstoff eingesetzt, die im Bauteil verbleiben und damit zu einer entsprechenden Gewichtserhöhung führen.

Aus WO 02/072328 A1 ist bereits ein Stützkern nach dem Oberbegriff des Anspruchs 1 bekannt. Als wasserlösliches Bindemittel wird dabei Polyvinylpyrrolidon verwendet und als Füllstoff insbesondere Keramikhohlkugeln mit einem Durchmesser von etwa 120 µm. Die Suspension aus Wasser, Bindemittel und Füllstoff wird wie beim Schlickerguss in eine poröse Form gefüllt, um das Wasser abfließen zu lassen. Der Stützkern wird dann entformt und bei 120 °C mehrere Stunden getrocknet. Mit dem bekannten Verfahren können zwar Einzelstücke gefertigt werden, zur Herstellung großer Stückzahlen ist es jedoch ungeeignet.

Aus US-A-5492660 ist ein wasserdispergierbarer Stützkern gemäß dem Oberbegriff des Anspruchs 1 bekannt, bei dem als Füllstoff massive oder hohle Glaskugeln verwendet werden. Dieser Stützkern wird gemäß dem Anspruch 13 mit einem Formwerkzeug geformt, getrocknet und dann mit Verstärkungsfasern umwickelt, auf die Fasern auf dem Stützkern mit einem aushärtbaren Kunststoff getränkt, der Kunststoff ausgehärtet und der Stützkern mit Wasser ausgeschwemmt wird, wobei das Tränken der Fasern auf dem Stützkern mit dem Resin Tranfer Molding Injection-Verfahren durchgeführt wird.

Aufgabe der Erfindung ist es, einen wasserdispergierbaren Stützkern bereitzustellen, mit dem das Verfahren zur Herstellung eines Strukturhohlbauteils aus faserverstärktem Kunststoff wesentlich verkürzt werden kann.

Dies wird erfindungsgemäß mit dem im Anspruch 1 gekennzeichneten Stützkern erreicht. In den übrigen Ansprüchen sind vorteilhafte Ausgestaltungen der Erfindung wiedergegeben.

Nach der Erfindung wird als Füllstoff für den Stützkern Blähglasgranulat verwendet. Blähglasgranulat ist ein Glas-Recyclingprodukt, das insbesondere zur Schall- und Wärmeisolierung eingesetzt wird. Zur Herstellung von Blähglasgranulat wird Altglas gemahlen, das dabei gebildete Glasmehl mit Wasser, Binde- und Blähmittel vermischt und daraus unter Aufschäumen des Blähmittels in einem Drehrohrofen bei etwa 900 °C das kugelförmige Granulat gebildet.

Das Blähglasgranulat führt zu einer hohen Porosität des Stützkerns, wodurch die Trocknungszeit wesentlich reduziert werden kann.

Auch kann der Stützkern nach dem erfindungsgemäßen Verfahren mit einer Kernschießmaschine, wie sie beispielsweise in DE 102 00 927 A1 beschrieben ist, in die Form mit Druckluft eingeschossen werden, weil durch das Blähglasgranulat die erforderliche Fließfähigkeit oder Fluidisierbarkeit des Formstoffs sichergestellt wird. Demgegenüber kann ein Formstoff, dessen Füllstoff, wie nach WO 02/072328 A1, aus Hohlkugeln besteht, mit einer solchen Maschine nicht eingeschossen werden, weil der Formstoff nicht die notwendigen Fließeigenschaften besitzt.

Auch kann erfindungsgemäß der Stützkern durch Pressen hergestellt werden, d.h. mit einem Formwerkzeug, bei dem der Formstoff mit einem Kolben in die Form gepresst wird. Dieses Verfahren ist bei dem Formstoff nach WO 02/072328 A1 ebenso wenig anwendbar, weil die Hohlkugeln unter dem hohen Pressdruck zerbrechen und damit die Festigkeit des Stützkerns drastisch herabgesetzt wird.

Um das Wasser zu entfernen, wird der Stützkern vorzugsweise in der Form erwärmt und der Wasserdampf vorzugsweise mit Luft oder einem anderen gasförmigen Medium ausgetrieben. Dank seiner hohen Porosität kann der Stützkern erfindungsgemäß damit in kürzester Zeit, also in wenigen Minuten, wenn nicht Sekunden, hergestellt und getrocknet werden.

Das Blähglasgranulat weist vorzugsweise eine mittlere Korngröße von 100 bis 800 µm, insbesondere 200 bis 500 µm auf, um eine optimale Porosität des Stützkerns zu erhalten.

Um die Festigkeit des Stützkerns zu erhöhen, können dem Blähglasgranulat als Füllstoff zusätzlich Keramik- oder Glaskugeln zugemischt werden, vorzugsweise mit einem mittleren Durchmesser von 10 bis 400 µm, insbesondere 100 bis 300 µm. Da die Hohlkugeln die Porosität des Stützkerns herabsetzen, beträgt ihr Anteil vorzugsweise jedoch weniger als 50 Gew.-% des Füllstoffs. Desgleichen kann als Füllstoff zusätzlich Sand verwendet werden.

Der Wasseranteil des Formstoffs beträgt vorzugsweise 7 bis 35 Gew.-%, insbesondere 10 bis 30 Gew.-%, bezogen auf das Gewicht des Füllstoffs. Mit einem Anteil von mehr als 35 Gew.-% wird meistens keine Verbesserung der Fließfähigkeit mehr erreicht. Um eine möglichst kurze Trocknungszeit zu erhalten, versteht es sich, dass der Wassergehalt möglichst gering gehalten wird.

Der Anteil des Bindemittels beträgt vorzugsweise 2 bis 20 Gew.-%, insbesondere 5 bis 12 Gew.-%, bezogen auf das Gewicht des Füllstoffs.

Als Bindemittel wird vorzugsweise ein Bindemittel auf Cellulosebasis verwendet, insbesondere ein Gemisch aus einem Bindemittel auf Cellulosebasis und einem Bindemittel auf Stärkebasis. Mit diesem Bindemittelgemisch wird eine hervorragende Fließfähigkeit des Formstoffs erreicht.

Das Bindemittel auf Cellulosebasis ist vorzugsweise Carboxymethylcellulose, jedoch können beispielsweise auch Methylhydroxyethylcellulose, Methylcellulose oder dergleichen verwendet werden. Das Bindemittel auf Stärkebasis ist vorzugsweise Stärkeether.

Das Gewichtsverhältnis des Bindemittels auf Cellulosebasis zu dem Bindemittel auf Stärkebasis liegt vorzugsweise zwischen 1:20 bis 20:1, vorzugsweise zwischen 1:10 bis 1:1.

Das erfindungsgemäß bevorzugt verwendete Bindemittel auf Cellulose- bzw. Stärkebasis zeichnet sich zudem durch eine geringe Hygroskopizität aus. Damit wird die Restfeuchte des Stützkerns durch Feuchtigkeit aus der Umgebung nicht erhöht. Die Restfeuchte des Stützkerns beträgt vorzugsweise 0,1 bis 0,5 Gew.-%. Bei einer Restfeuchte über 0,5 Gew.-% nimmt die Festigkeit des Stützkerns ab, während er bei einer Restfeuchte von weniger als 0,1 Gew.-% spröde wird.

Außer seiner hohen Porosität und des damit entsprechend reduzierten Gewichts zeichnet sich der erfindungsgemäße Stützkern durch seine hohe Festigkeit aus.

Zum Umwickeln des erfindungsgemäßen Stützkerns kann eine Flechtanlage verwendet werden, in deren Auge sich der Stützkern befindet, während die Verstärkungsfäden unter hoher Spannung von der Peripherie abgezogen werden. Dank seiner hohen Bruchfestigkeit hält der Stützkern diesen hohen Abzugskräften ohne weiteres stand.

Das Tränken der Fasern auf dem Stützkern mit einem aushärtbaren Kunststoff und Aushärten des Kunststoffs kann dann nach dem RTM- oder Vakuum-Injektionsverfahren erfolgen. D.h., der konfektionierte Stützkern wird zwischen die beiden Werkzeuge, also beispielsweise das Ober- und das Unterwerkzeug einer beheizten Presse gelegt, worauf die Verstärkungsfasern auf dem Stützkern mit einem wärmehärtbaren Kunststoff, beispielsweise einem Expoxidharz, imprägniert werden, das in den Hohlraum mit dem Stützkern zwischen den beiden Werkzeugteilen injiziert wird. Dabei kann das Resin-Transfer-Molding(RTM)-Verfahren durchgeführt werden, bei dem der wärmehärtbare Kunststoff unter einem Druck von 10 bar und mehr in den Hohlraum gepresst wird, oder das Vakuum-Injektionsverfahren, bei dem der wärmehärtbare Kunststoff in den Hohlraum gesaugt wird. Nach dem Aushärten des Harzes wird entformt und der Stützkern mit Wasser ausgeschwemmt, so dass das faserverstärkte Strukturhohlbauteil gebildet wird.

Durch die Erfindung wird eine schnelle Trocknung der Stützkerne sichergestellt. Zudem wird die Fließfähigkeit und Verarbeitbarkeit des Formstoffs deutlich verbessert, so dass die Stützkerne mit kurzen Taktzeiten beispielsweise mit einer Kernschießmaschine oder mit einer isostatischen Presse hergestellt werden können.

Nach dem erfindungsgemäßen Verfahren können beliebige Strukturhohlbauteile aus faserverstärktem Kunststoff hergestellt werden. Im Automobilbereich sind insbesondere die Stützsäulen, also die A-, B- und C-Säule, Schweller und Stoßfänger als Beispiele für solche faserverstärkte Strukturhohlbauteile zu nennen.

### Beispiel 1

Es wird ein Formstoff aus Blähglasgranulat (0,1 bis 0,7 mm; x_{0,5} = 0,34 mm) und Carboxymethylcellulose (CMC)/Stärkeether(SE)-Lösung hergestellt.

Die Bindemittelzusammensetzung beträgt:
Volumenverhältnis CMC-Lösung/SE-Lösung = 40/60
CMC-Lösung: ca. 15 Gew.-% in Wasser
SE-Lösung: ca. 35 Gew.-% in Wasser

Die Formstoffzusammensetzung beträgt:

| | |
|---|---|
| Füllstoffgehalt: | 77 Gew.-% |
| Bindemittelgehalt (CMC/SE): | 6 Gew.-% |
| Wassergehalt: | 17 Gew.-%. |

### Beispiel 2

Es wird ein Formstoff aus einer Mischung aus Blähglasgranulat (0,1 bis 0,7 mm; x_{0,5} = 0,34 mm) und Keramikhohlkugeln (0,01 bis 0,5 mm; x_{0,5} = 0,14 mm) und Carboxymethylcellulose (CMS)/Stärkeether(SE)-Lösung hergestellt. Das Gewichtsverhältnis Blähglasgranulat/Keramikhohlkugeln beträgt 50/50.

Die Bindemittelzusammensetzung beträgt:
Volumenverhältnis CMC-Lösung/SE-Lösung = 40/60
CMC-Lösung: ca. 15 Gew.-% in Wasser
SE-Lösung: ca. 35 Gew.-% in Wasser

Die Formstoffzusammensetzung beträgt:

| | |
|---|---|
| Füllstoffgehalt: | 77 Gew.-% |
| Bindemittelgehalt (CMC/SE): | 6 Gew.-% |
| Wassergehalt: | 17 Gew.-%. |

### Vergleichsbeispiel

Es wird ein Formstoff aus Keramikhohlkugeln (0,01-0,35 mm; x_{0,5} = 0,13 mm) und einem auf Polyvinylpyrrolidon (PVP) basierenden Bindemittelsystem hergestellt.

Die Formstoffzusammensetzung beträgt:

| | |
|---|---|
| Füllstoffgehalt: | 69,5 Gew.-% |
| Bindemittelgehalt: | 8,5 Gew.-% |
| Wassergehalt: | 22 Gew.-%. |

Aus dem Formstoff der Beispiele 1 und 2 sowie des Vergleichsbeispiels wird ein Prüfkörper (r = 2,5 cm; h = 5 cm) im Rammapparat mit Protokollierung des eingewogenen Formstoffs hergestellt. Die Gasdurchlässigkeit der Prüfkörper wird mit einem Durchlässigkeitsprüfapparat Typ PDU der Firma DISA bestimmt.

Mit Hilfe der Gasdurchlässigkeit lassen sich Formstoffe hinsichtlich Trocknung und Verarbeitbarkeit (Fluidisierbarkeit) beurteilen. Geringe Gasdurchlässigkeitswerte weisen auf ein geringes Porenvolumen und damit eine schlechte Durchströmbarkeit hin, was sich negativ auf die Trocknungs- und Zykluszeiten auswirkt. Auch für die Fluidisierbarkeit (beim Kernschießprozess) ist eine bestimmte Gasdurchlässigkeit des Formstoffs notwendig.

Die Ergebnisse sind in der nachstehenden Tabelle wiedergegeben.

**Tabelle**

| | Einwaage in g (feucht) | Gasdurchlässigkeit Gd (Formstoff feucht) | Gasdurchlässigkeit Gd (Formstoff trocken) |
|---|---|---|---|
| **Vergleichsbeispiel** | 87 | > 3 | 40 |
| **Beispiel 1** Blähglasgranulat + CMC/SE (40/60) | 76 | 300-450 | < 500 |
| **Beispiel 2** Blähglasgranulat/ Keramikhohlkugel (50/50) + CMC/SE (40/60) | 77 | 30-50 | 70-100 |
| Quarzsand + anorganisches Bindemittel | 155 | 200-300 | |

Blähglasgranulate mit CMC/SE-Bindemittel sind bei gleichzeitig geringster Dichte am besten durchströmbar. Zum Vergleich wurde auch die Gasdurchlässigkeit von Quarzsand mit anorganischem Bindemittel aufgenommen, da dieser derzeit prozesssicher im Kernschießprozess bei geringer Trocknungszeit verarbeitet werden kann. Die Substitution eines Anteils von Blähglasgranulat durch feinere Keramikhohlkugeln zur Festigkeitssteigerung hat gemäß dem Beispiel 2 ein Absenken des freien Porenvolumens und eine Verringerung der Gasdurchlässigkeit zur Folge. Der Formstoff des Vergleichsbeispiels hat fast keine Gasdurchlässigkeit, was sich sehr negativ auf die Trocknungs- und Verarbeitungseigenschaften auswirkt.

Daraus folgt für die Trocknung und Verarbeitbarkeit:

Mit CMC/SE-gebundenen Blähglasgranulaten lassen sich aufgrund der höheren Porosität und dem niedrigeren Wassergehalt die Trocknungsgeschwindigkeiten gegenüber PVP-gebundenen Keramikhohlkugeln wesentlich erhöhen. Auch ist mit einem CMC/SE-gebundenen Formstoff im Gegensatz zu einem PVP-gebundenen Formstoff wegen der guten Gasdurchlässigkeit und damit Fluidisierbarkeit eine Formgebung im Kernschießprozess darstellbar. Bei der Substitution von Anteilen des Blähglasgranulats durch Keramikhohlkugeln wird die Durchströmbarkeit und damit auch die Trocknungsgeschwindigkeit herabgesetzt. Im Beispiel 2 ist ein sehr hohes Mischungsverhältnis (50:50) gewählt worden, um die Grenzen der Füllstoffsubstitution aufzuzeigen. Realistische Mischungsverhältnisse hinsichtlich der Trocknungsgeschwindigkeit und der prozesssicheren Verarbeitbarkeit liegen im Bereich von 80:20 bis 70:30 Gewichtsteilen Blähglasgranulat zu Keramikhohlkugeln mit zu erwartenden Gasdurchlässigkeiten Gd zwischen 150 und 250.

## Patentansprüche

1. Wasserdispergierbarer Stützkern zur Herstellung eines Strukturhohlbauteils aus faserverstärktem Kunststoff aus einem wasserlöslichen Bindemittel und einem Füllstoff, **dadurch gekennzeichnet, dass** der Füllstoff zumindest teilweise aus Blähglasgranulat besteht, das als kugelförmiges Granulat durch Vermischen von gemahlenem Altglasmehl mit Wasser, Binde- und Blähmittel und Aufschäumen des Blähmittels in einen Drehrohrofen bei etwa 900°C hergestellt ist.

2. Stützkern nach Anspruch 1, **dadurch gekennzeichnet, dass** das Blähglasgranulat eine mittlere Korngröße von 100 bis 800 µm aufweist.

3. Stützkern nach Anspruch 1 oder 2, **dadurch gekennzeichnet, dass** der Füllstoff aus einem Gemisch aus Blähglasgranulat und Hohlkugeln besteht.

4. Stützkern nach Anspruch 3, **dadurch gekennzeichnet, dass** der Anteil des Blähglasgranulats mindestens 50 Gew.-% des Füllstoffs beträgt.

5. Stützkern nach Anspruch 3 oder 4, **dadurch gekennzeichnet, dass** die Hohlkugeln eine mittlere Korngröße von 10 bis 400 µm aufweisen.

6. Stützkern nach einem der vorstehenden Ansprüche, **dadurch gekennzeichnet, dass** der Anteil des Bindemittels 2 bis 20 Gew.-%, bezogen auf das Gewicht des Füllstoffs, beträgt.

7. Stützkern nach einem der vorstehenden Ansprüche, **dadurch gekennzeichnet, dass** das Bindemittel zumindest teilweise aus einem Bindemittel auf Cellulosebasis besteht.

8. Stützkern nach Anspruch 7, **dadurch gekennzeichnet, dass** das Bindemittel ein Gemisch aus einem Bindemittel auf Cellulosebasis und einem Bindemittel auf Stärkebasis ist.

9. Stützkern nach Anspruch 7 oder 8, **dadurch gekennzeichnet, dass** das Gewichtsverhältnis des Bindemittels auf Cellulosebasis zu dem Bindemittel auf Stärkebasis 1:20 bis 20:1 beträgt.

10. Stützkern nach einem der Ansprüche 7 bis 9, **dadurch gekennzeichnet, dass** das Bindemittel auf Cellulosebasis Carboxymethylcellulose ist.

11. Stützkern nach Anspruch 8 oder 9, **dadurch gekennzeichnet, dass** das Bindemittel auf Stärkebasis Stärkeether ist.

12. Stützkern nach einem der vorstehenden Ansprüche, **dadurch gekennzeichnet, dass** er eine Restfeuchte von 0,1 bis 0,5 Gew.-% aufweist.

13. Verfahren zur Herstellung eines Strukturhohlbauteils aus faserverstärktem Kunststoff mit einem wasserdispergierbaren Stützkern nach einem der vorstehenden Ansprüche, wobei der Stützkern aus einem Formstoff aus dem wasserlöslichen Bindemittel, dem Füllstoff und Wasser mit einem Formwerkzeug geformt, getrocknet und dann mit den Verstärkungsfasern umwickelt wird, worauf die Fasern auf dem Stützkern mit einem aushärtbaren Kunststoff getränkt, der Kunststoff ausgehärtet und der Stützkern mit Wasser ausgeschwemmt wird wobei das Tränken der Fasern auf dem Stützkern mit dem Resin Transfer Molding - oder mit dem Vakuum-Injektionsverfahren durchgeführt wird.

14. Verfahren nach Anspruch 12, **dadurch gekennzeichnet, dass** dem Stützkern zum Trocknen ein gasförmiges Medium zugeführt wird.

15. Verfahren nach Anspruch 13 oder 14, **dadurch gekennzeichnet, dass** der Formstoff in das Formwerkzeug eingeschossen oder gepresst wird.

## Claims

1. A water-dispersible supporting core for producing a hollow structural component from fibre-reinforced plastics material, the core comprising a water-soluble binder and a filler, **characterised in that** the filler consists at least partly of expanded glass granulate, produced in the form of a spherical granulate by mixing ground and powdered cullet with water, binder and expanding agent and foaming the expanding agent in a rotary tubular kiln at about 900°C.

2. A core according to claim 1, **characterised in that** the expanded glass granulate has an average particle size of 100 to 800 µm.

3. A core according to claim 1 or claim 2, **characterised in that** the filler is a mixture of expanded glass granulate and hollow balls.

4. A core according to claim 3, **characterised in that** the contents of expanded glass granulate is at least 50 wt.% of the filler.

5. A core according to claim 3 or claim 4, **characterised in that** the hollow balls have an average particle size of 10 to 400 µm.

6. A core according to the preceding claims, **characterised in that** the content of binder is 2 to 20 wt.% relative to the weight of the filler.

7. A core according to any of the preceding claims, **characterised in that** the binder comprises at least partly of a cellulose-based binder.

8. A core according to claim 7, **characterised in that** the binder is a mixture of a cellulose-based binder and a starch-based binder.

9. A core according to claim 7 or claim 8, **characterised in that** the proportion by weight of the cellulose-based binder to the starch-based binder is 1:20 to 20:1.

10. A core according to any of claims 7 to 9, **characterised in that** the cellulose-based binder is carboxymethyl cellulose.

11. A core according to claim 8 or claim 9, **characterised in that** the starch-based binder is starch ether.

12. A core according to any of the preceding claims, **characterised in that** it has a residual moisture content of 0.1 to 0.5 wt. %.

13. A method of producing a hollow structural part from fibre-reinforced plastics material by using a water-dispersible supporting core according to any of the preceding claims, wherein the core, comprising a moulding material, the water-soluble binder, the filler and water, is shaped in a mould, dried and wrapped in the reinforcing fibres, after which the fibres on the core are impregnated with a thermosetting plastics material, the plastics material is cured and the core is washed out with water, wherein the fibres on the core are impregnated by the resin transfer moulding method or by the vacuum injection method.

14. A method according to claim 12, **characterised in that** a gaseous medium is supplied for drying the core.

15. A method according to claim 13 or 14, **characterised in that** the moulding material in injected or pressed into the mould.

## Revendications

1. Noyau de moule dispersible dans l'eau pour fabriquer un composant de structure creuse en matière plastique renforcée par des fibres à partir d'un liant soluble dans l'eau et d'une charge,
**caractérisé en ce que**
la charge est formée au moins en partie de granulés de verre soufflé fabriqués comme granulés en forme de billes par mélange de farine de vieux verres broyés avec de l'eau, un liant et un agent gonflant et expansion de l'agent gonflant dans un four rotatif à une température d'environ 900°C.

2. Noyau de moule selon la revendication 1,
**caractérisé en ce que**
les granulés de verre gonflé ont une granulométrie moyenne de 100-800 µm.

3. Noyau de moule selon la revendication 1 ou 2,
**caractérisé en ce que**
la charge est formée d'un mélange de granulés de verre gonflé et de billes creuses.

4. Noyau de moule selon la revendication 3,
**caractérisé en ce que**
la teneur en granulés de verre gonflé représente au moins 50 % en poids de la charge.

5. Noyau de moule selon la revendication 3 ou 4,
**caractérisé en ce que**
les billes creuses ont une taille moyenne de 10 à 400 µm.

6. Noyau de moule selon l'une des revendications précédentes,
**caractérisé en ce que**
la teneur en liant est de 2 à 20 % en poids rapporté au poids de la charge.

7. Noyau de moule selon l'une des revendications précédentes,
**caractérisé en ce que**
le liant se compose au moins en partie d'un liant à base de cellulose.

8. Noyau de moule selon la revendication 7,
**caractérisé en ce que**
le liant est un mélange d'un liant à base de cellulose et d'un liant à base d'amidon.

9. Noyau de moule selon l'une des revendications 7 ou 8,
**caractérisé en ce que**
le rapport pondéral du liant à base de cellulose et du liant à base d'amidon est de 1 :20 jusqu'à 20 :1.

10. Noyau de moule selon l'une des revendications 7 à 9,
**caractérisé en ce que**
le liant à base de cellulose est de la carboxyméthylcellulose.

11. Noyau de moule selon l'une des revendications 8 ou 9,
**caractérisé en ce que**
le liant à base d'amidon est de l'éther d'amidon.

12. Noyau de moule selon l'une des revendications précédentes,
**caractérisé en ce que**
l'humidité résiduelle représente entre 0,1 et 0,5 % en poids.

13. Procédé de fabrication d'un composant à structure creuse en matière plastique renforcée par des fibres à l'aide d'un noyau de moule dispersible dans l'eau selon l'une des revendications précédentes,
le noyau de moule étant réalisé en une matière de moulage comprenant un liant soluble dans l'eau, la charge et l'eau dans un moule, puis séché, et ensuite on enroule les fibres de renforcement puis on imprègne les fibres sur le noyau de moule avec une matière plastique durcissable, on fait durcir la matière plastique et on évacue le noyau de moule en le dissolvant avec de l'eau,
l'imprégnation des fibres sur le noyau de moule se faisant par moulage de transfert de résine ou par un procédé d'injection sous vide.

14. Procédé selon la revendication 12,
**caractérisé en ce qu'**
on sèche le noyau de moule avec un milieu gazeux.

15. Procédé selon la revendication 13 ou 14,
**caractérisé en ce qu'**
on enferme ou on presse la matière de moulage dans le moule.
